Europäisches Patentamt

European Patent Office

Office européen des brevets

(11) Publication number: **0 256 883**
A1

# (12) EUROPEAN PATENT APPLICATION

(21) Application number: **87307304.3**

(22) Date of filing: **18.08.87**

(51) Int. Cl.⁴: **C 02 F 1/52**
G 21 F 9/10

(30) Priority: **18.08.86 US 897459**

(43) Date of publication of application:
**24.02.88 Bulletin 88/08**

(84) Designated Contracting States:
**DE ES FR GB IT SE**

(71) Applicant: **WESTINGHOUSE ELECTRIC CORPORATION**
**Westinghouse Building Gateway Center**
**Pittsburgh Pennsylvania 15222 (US)**

(72) Inventor: **Murray, Alexander Peter**
**3943 Hickory Hill Road**
**Murrysville, PA 15668 (US)**

**Talko, Francis**
**583 Butterfield Drive**
**N. Huntingdon, PA 15642 (US)**

(74) Representative: **van Berlyn, Ronald Gilbert**
**23, Centre Heights**
**London, NW3 6JG (GB)**

(54) Method of removing sulfate from an aqueous sodium sulfate solution.

(57) Method of treating an aqueous waste stream containing radionuclides and at least about 0.1% by weight sodium sulfate. A compound is added to the stream which is a salt, a hydroxide, or mixture thereof. The compound consists of a cation that forms an insoluble sulfate and an anion that forms either sodium hydroxide or a stable sodium salt. When the compound is added, the insoluble sulfate precipitates from the solution and a sodium salt or sodium hydroxide remains in the solution. The precipitate is then dewatered. The solution can be concentrated and the concentrate solution disposed of in cement or, if the solution contains sodium hydroxide, the solution can be passed through a polishing ion resin bed, the concentration of the sodium hydroxide can be increased if necessary, and the solution can be used to regenerate anionic exchange resins.

EP 0 256 883 A1

Description

## METHOD OF REMOVING SULFATE FROM AN AQUEOUS SODIUM SULFATE SOLUTION

This invention relates to a method of removing sulfate from an aqueous sodium sulfate solution.

In boiling water nuclear reactor plants, water in the primary loop is circulated between the reactor core and a steam generator. That water is also passed through both anionic exchange resins and cationic exchange resins to remove ions in the water that could cause corrosion of metal parts in the reactor and steam generator. When the ion exchange resins have become exhausted, a solution of sodium hydroxide is passed through the anionic exchange resin to regenerate the resin, and a solution of sulfuric acid is passed through the cationic exchange resin to regenerate that resin. The resulting contaminated streams of sodium hydroxide and sulfuric acid are combined to form a neutral stream containing about I to about 15% sodium sulfate because it is easier to process and evaporate a neutral stream than a stream which is highly alkaline or highly acidic.

This sodium sulfate radwaste stream is typically treated by evaporation to produce a slurry containing about 80% sodium sulfate. However, the evaporation of the sodium sulfate stream can create processing difficulties because sodium sulfate has unusual solubility characteristics. While sodium sulfate is soluble up to about 33% at 90°F, above this temperature it has retrograde solubility, which means that as the temperature rises it crystallizes out as an anhydrous salt, coating the hotter surfaces in the heat exchangers and other equipment and fouling or plugging the equipment. In addition, above a concentration of about 22%, sodium sulfate precipitates out sodium sulfate decahydrate as the solution is cooled. Sodium sulfate decahydrate is a gel which rapidly becomes a rock-hard salt. In a highly radioactive environment it is very difficult to clean and remove such a hard precipitate.

According to the present invention a method of removing sulfate from an aqueous solution of sodium sulfate is characterized by adding barium hydroxide to said solution, precipitating barium sulfate and forming a solution of sodium hydroxide.

The invention also includes a method of treating an aqueous waste stream containing radionuclides and at least 0.1% by weight sodium sulfate characterized by (A) adding to said solution a compound selected from salts, hydroxides, or mixtures thereof, said compound consisting of a cation which forms an insoluble sulfate with sulfate ion and an anion which forms sodium hydroxide or a stable sodium salt with sodium ion, whereby said insoluble sulfate is precipitated and said sodium hydroxide or said sodium salt remains in solution; and (B) dewatering said precipitated insoluble sulfate.

We have discovered a method of treating aqueous sodium sulfate radwaste solutions which avoids the problems of the formation of anhydrous sodium sulfate and sodium sulfate decahydrate. We are able to avoid these problems by precipitating the sulfate ion out of the solution as an insoluble salt, leaving behind a solution of a sodium salt or sodium hydroxide, which does not have these unusual solubility characteristics. The resulting stream can be treated in an evaporator without crystallization occurring on the hotter surfaces or precipitation occurring when the solution is cooled.

In addition, we have found that the sulfate ion can be precipitated by the addition of an alkaline earth metal hydroxide to form an alkaline earth metal sulfate and a solution of sodium hydroxide. That this occurs is very surprising because sodium sulfate is a salt of a strong base and a strong acid and one would not expect such a salt to be split by the addition of an alkaline earth metal hydroxide, which is a weak base. We believe that such a reaction is against the general teachings of chemistry, but nevertheless we have discovered that it occurs. We have further found that the compounds used to form the insoluble sulfates can be added as solids rather than as aqueous solutions. This is also surprising because one would normally not expect a solid reactant to efficiently react with a solution to form a solid precipitate.

The invention is applicable to aqueous radwaste streams containing at least about 0.1% sodium sulfate, and may contain about 15% or more sodium sulfate. These streams also typically contain minor amounts of chlorine, iron, chromium, and other ions as well as ions of radionuclides such as $Sr^{90}$, $Cs^{134}$, $Cs^{137}$, and $Co^{60}$. The temperature range of the solution is typically between room temperature and its boiling point. The pH of the solution is not critical, and is typically between 6 and 8.

In the process of this invention, a salt or a hydroxide is added to the sodium sulfate solution, thereby forming an insoluble (i.e., having the solubility of less than 0.1%) sulfate and a stable (i.e., having a solubility greater than 10%, minimal hydrate formation, normal solubility behavior, and soft crystals if it crystallizes out) sodium compound which is dissolved in the solution:

$$Na_2SO_4 + MA \rightarrow MSO_4 + 2\ NaA$$

where M is the cation and A is the anion. Suitable cations include the alkaline earth metals, particularly barium, strontium, and calcium. Of the three, barium is preferred because it has the unusual property of forming the most insoluble sulfate, even though some of the barium salts that are added to the sodium sulfate solution, such as barium acetate, are more soluble than the analogous salts of other alkaline earth metals. Suitable anions include acetate, lactate, formate, and hydroxyl. Hydroxyl is the most preferred anion because it forms a solution of sodium hydroxide which is recyclable. The next most preferred anion is acetate because the acetate salts are easily treated and are more soluble than the salts of the other anions. The amount of the compound that is added to the sodium sulfate solution should be about 10 mole % less than stoichiometric for the above reaction to about 25 mole % in excess of stoichiometric. The compound is preferably added as a solid to reduce the amount of water that must be processed and removed.

After the addition of the compound to the sodium sulfate solution, the resulting sulfate precipitate is dewatered. This can be accomplished by filtering, centrifuge, decantation, evaporation, underdraining, or other procedure. The dewatered precipitate of the insoluble sulfate can then be disposed of as radwaste. A conventional disposal method is to seal the radwaste in high integrity containers, or to add cement and encapsulate the radwaste in cement. The material is then shipped to a burial site for disposal.

If the remaining solution is a solution of a sodium salt (instead of a sodium hydroxide solution) the solution can be concentrated using, for example, hyperfiltration or evaporation. These operations are considerably easier when sulfate is not present. The water removed from the solution is usually clean enough to be released to the environment, or it can be recycled in the processes used in the nuclear reactor. The remaining concentrate solution can be encapsulated in cement or otherwise disposed of as radwaste. If the solution is a solution of sodium hydroxide, it may have a concentration of about 5% sodium hydroxide, which may be a concentration sufficiently high to permit its use in regenerating ion exchange resins; if not, its concentration can be increased to a useful concentration, for example, about 5 to about 15%, using, for example, hyperfiltration or evaporation. Before the solution is used, however, it is desirable to pass it through a polishing ion exchange resin bed. This is a resin bed which typically has a mixture of a sodium form cation and a hydroxide form anion. The sodium form cation removes cations, such as barium, nickel, and cobalt, from the solution and releases the sodium, and the hydroxide form anion removes anions, such as chloride and sulfate, and releases hydroxide.

The invention will now be illustrated with reference to the following Examples:

Example 1

A solution in water was prepared at room temperature containing 55.556 gms (10%) $Na_2SO_4$, and 500 gms $H_2O$. This solution has a pH of about 6.4 at 69°C. A stoichiometric amount, 99.705 gms, of solid barium acetate was added. The barium acetate immediately dissolved and a new precipitate of barium sulfate formed. The remaining solution of sodium acetate had a pH of 8.57. The solution was filtered, leaving a filter cake 4 mm thick, which had a volume of 55.6 ml. The volume reduction factor was 9. (The volume reduction factor is calculated by taking the initial solution volume and dividing it by the final, filter cake volume.)

Example 2

Example 1 was repeated using 123.282 gms of solid barium hydroxide octahydrate instead of barium acetate. The precipitated filter cake of barium sulfate was 6 mm thick and had a volume of 83.4 ml. The remaining solution of sodium hydroxide had a pH of 11.8. The volume reduction factor was 6.

These two examples clearly show an effective volume reduction on the sulfate, and, in the case of barium hydroxide, in addition, the high, final pH indicates effective production of sodium hydroxide for further processing and reuse.

**Claims**

1. A method of removing sulfate from an aqueous solution of sodium sulfate characaterized by adding barium hydroxide to said solution, precipitating barium sulfate and forming a solution of sodium hydroxide.

2. A method according to claim 1, characterized in that barium hydroxide is added as a solid.

3. A method of treating an aqueous waste stream containing radionuclides and at least 0.1% by weight sodium sulfate characterized by

(A) adding to said solution a compound selected from salts, hydroxides, or mixtures thereof, said compound consisting of a cation which forms an insoluble sulfate with sulfate ion and an anion which forms sodium hydroxide or a stable sodium salt with sodium ion, whereby said insoluble sulfate is precipitated and said sodium hydroxide or said sodium salt remains in solution; and

(B) dewatering said precipitated insoluble sulfate.

4. A method according to claim 3, characterized in that the cation is of barium, strontium, calcium, or mixtures thereof.

5. A method according to claim 3 or 4, characterized in that the anion is hydroxyl, acetate, formate, lactate, and mixtures thereof.

6. A method according to claim 3, 4 or 5, characterized in that the amount of the compound is about 10 mole % less than stoichiometric with said sodium sulfate to about 25 mole % in excess of stoichiometric.

7. A method of treating an aqueous waste stream containing radionuclides and at least about 0.1% by weight sodium sulfate characterized by

(A) adding to said solution a salt formed from an anion and an alkaline earth metal cation, whereby a sulfate of said cation is precipitated and the sodium salt of said anion remains in solution;

(B) dewatering said precipitate;

(C) disposing of said precipitate as radwaste;

(D) evaporating said solution to produce evaporated water and concentrate solution; and

(E) disposing of said concentrate solution as radwaste.

8. A method according to claim 7 characterized in that the radwaste is encapsulated in cement.

9. A method according to claim 7 or 8, characterized in that the cation is barium.

10. A method according to claim 7, 8 or 9, characterized in that the anion is acetate.

11. A method of treating an aqueous waste stream containing radionuclides and at least about 0.1% by weight sodium sulfate characterized by

(A) adding to said solution an alkaline earth metal hydroxide, whereby an alkaline earth metal sulfate is precipitated and sodium hydroxide is formed in said solution;

(B) dewatering said precipitate;

(C) passing said solution through a polishing ion resin bed;

(D) increasing, if necessary, the concentration of sodium hydroxide in said solution; and

(E) passing said solution through a spent anionic exchange resin to regenerate said resin.

12. A method according to claim 11, characterized in that the alkaline earth metal hydroxide is barium hydroxide.

13. A method according to claim 11 or 12, characterized in that the concentration of sodium hydroxide is increased to from 5 to 15% by evaporation or hyperfiltration.

# EUROPEAN SEARCH REPORT

**European Patent Office**

Application number

EP 87 30 7304

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 653 829 (CATALYTIC CONSTRUCTION CO.) * Column 5, line 68; column 9, claim 1 * | 1-3 | C 02 F 1/52 G 21 F 9/10 |
| A | | 7-12 | |
| A | GB-A-1 166 151 (THE UNITED STATES OF AMERICA) * Page 5, claims 3,7; page 1, line 37 - page 2, line 4 * | 1-5,7, 9,11, 12 | |
| A | US-A-2 912 378 (THE PURE OIL CO.) * Page 2, claims 1,3 * | 3-5,9, 10 | |
| A | TECHNISCHE RUNDSCHAU SULZER, GEBRÜDER SULZER, vol. 53, no. 4, 1971, pages 227-235, Winterthur, CH; E. KIESCHNICK: "Dekontamination radioaktiver Abwässer" * Page 229 "Gezielte Fällung"; page 230 "Ionenaustausch", "Thermische Trennung und Konzentrierung durch Stand- und Umlaufverdampfer"; page 231 "Endkonzentrierungs- und Verfestigungsverfahren" * | 7-12 | **TECHNICAL FIELDS SEARCHED (Int. Cl.4)** C 02 F G 21 F C 01 F |

The present search report has been drawn up for all claims

| Place of search | Date of completion of the search | Examiner |
|---|---|---|
| THE HAGUE | 27-10-1987 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82